# EUROPÄISCHE PATENTSCHRIFT

(11) **EP 2 526 840 B1**
(45) Veröffentlichungstag und Bekanntmachung des Hinweises auf die Patenterteilung: **21.01.2015**
(21) Anmeldenummer: 12169033.3
(22) Anmeldetag: 23.05.2012
(51) Int. Cl.: A47J 31/44

(54) **Aufschäumvorrichtung**
Foaming device
Dispositif de moussage

(30) Priorität: 27.05.2011 DE 102011076639
(43) Veröffentlichungstag der Anmeldung: 28.11.2012
(73) Patentinhaber: WMF WÜRTTEMBERGISCHE METALLWARENFABRIK AG, 73309 Geislingen/Steige (DE)
(72) Erfinder: Bönsch, Torsten, 73312 Geislingen/Steige (DE); Dollner, Sander, 89079 Ulm-Wiblingen (DE)
(74) Vertreter: BRP Renaud & Partner mbB Rechtsanwälte Patentanwälte Steuerberater

(56) Entgegenhaltungen:
- EP-A1- 1 561 407
- EP-A1- 2 275 010
- DE-A1-102009 013 937
- US-B2- 6 713 110

## Beschreibung

Die vorliegende Erfindung betrifft eine Aufschäumvorrichtung zum Aufschäumen von Milch, mit einer Zuleitung für Dampf, einer Zuleitung für Luft und einer Zuleitung für Milch gemäß dem Oberbegriff des Anspruchs 1. Die Erfindung betrifft außerdem einen Kaffeeautomaten mit einer derartigen Aufschäumvorrichtung.

Aus der DE 44 45 436 C2 ist eine gattungsgemäße Aufschäumvorrichtung zum Aufschäumen von Milch, insbesondere zur Zubereitung von Cappuccino, mit einer Zuleitung für Dampf, einer Zuleitung für Luft und einer Zuleitung für Milch und mit einem Mischbereich bekannt, in dem die Zuleitungen zusammengeführt werden. Die Zuleitung für die Luft ist dabei mit einer Druckluftquelle zum Einblasen der Luft verbunden, wobei das Einblasen der Luft steuerbar ist. Hierdurch sollen insbesondere bei Beginn des Aufschäumvorgangs ein verbesserter Lufteintrag und somit verbesserte Aufschäumeigenschaften erreicht werden.

Eine weitere Vorrichtung ist aus der DE 10 2009 013937 A1 bekannt.

Bei bestimmten Milchschäumsystemen, wie sie beispielsweise aus der DE 44 45 436 C2 bekannt sind, wird die zum Aufschäumen benötigte Luft von einer Druckluftquelle stromauf einer Dampfdüse einer Dampfstrahlpumpe in die Dampfleitung gepumpt, wobei die genannte Druckluftquelle hierbei lediglich steuerbar, nicht jedoch regelbar ist. Nachteilig hierbei ist, dass der zur Dampferzeugung dienende Dampfkessel von einer elektrischen Heizung beheizt wird, bei der jedoch aufgrund der vorhandenen Heizungshysterese der im Kessel vorherrschende tatsächliche Druck von einem Nenndruck abweicht. Die Druckluftquelle ist hingegen auf einen definierten Gegendruck abgestimmt. Liefert somit der Dampfkessel einen zu geringen Druck, so fördert die Druckluftquelle überproportional zu viel Luft, wogegen bei einem zu hohen Dampfdruck die Druckluftquelle überproportional zu wenig Luft fördert. Die Folge der Abweichungen sind dabei unterschiedlichste Milchschaumergebnisse hinsichtlich Masse, Temperatur und Volumen, was insbesondere bei hochwertigen Kaffeeautomaten in der Gastronomie nicht mehr zeitgemäß ist.

Die vorliegende Erfindung beschäftigt sich daher mit dem Problem, für eine Aufschäumvorrichtung der gattungsgemäßen Art eine verbesserte oder zumindest eine alternative Ausführungsform anzugeben, die sich insbesondere durch gleichbleibende Milchschaumergebnisse hoher Qualität auszeichnet.

Dieses Problem wird erfindungsgemäß durch die Gegenstände der unabhängigen Ansprüche gelöst. Vorteilhafte Ausführungsformen sind Gegenstand der abhängigen Ansprüche.

Die vorliegende Erfindung beruht auf dem allgemeinen Gedanken, bei einer Aufschäumvorrichtung eine einerseits kostengünstige, andererseits jedoch effektive und zuverlässige, flexible und hinsichtlich eines Arbeitspunktes justierbare Luftmengenbegrenzung zu erreichen, die sich insbesondere selbst reguliert und die dadurch ein gleichbleibend hohes Qualitätsniveau eines herzustellenden Milchschaums sicherstellt. Die erfindungsgemäße Aufschäumvorrichtung zum Aufschäumen von Milch ist in Anspruch 1 definiert und weist dazu eine Zuführleitung für Dampf, eine Zuführleitung für Luft sowie eine Zuführleitung für Milch und einen Mischbereich auf, in welchem die einzelnen Zuführleitungen zusammengeführt werden. Die Zuführleitung für die Luft ist dabei mit einer Druckluftquelle zum Einblasen der Luft verbunden, so dass das Einblasen der Luft generell steuerbar ist. Erfindungsgemäß ist nun insbesondere im Bereich der Luftzuführleitung saugseitig der Luftdruckquelle zumindest eine Luftmengenbegrenzungseinrichtung vorgesehen, die ein Einblasen der Luft in die Luftzuführleitung in Abhängigkeit des Dampfdrucks in der Dampfzuführleitung bewirkt bzw. regelt. Dabei wird der Effekt genutzt, dass der Unterdruck saugseitig der Druckluftquelle, beispielsweise einer Luftpumpe, bei verändertem Dampfdruck druckseitig der Druckluftquelle variiert. Die Luftmengenbegrenzungseinrichtung gleicht insbesondere Hystereseeffekte einer Heizeinrichtung zum Erhitzen und Herstellen des Dampfes aus, so dass abhängig von dem in der Dampfzuführleitung herrschenden Dampfdruck stets die optimale Menge an Luft zugeführt wird. Alternativ ist auch vorstellbar, dass zumindest eine Luftmengenbegrenzungseinrichtung stromauf der Druckluftquelle angeordnet und derart ausgebildet ist, dass sie ein Einblasen der Luft in die Luftzuführleitung in Abhängigkeit eines zwischen der Luftmengenbegrenzungseinrichtung und der Druckluftquelle herrschenden Unterdrucks bewirkt bzw. regelt. Die Luftmengenbegrenzungseinrichtung kann dabei beispielsweise eine flächenveränderbare Blende aufweisen, wobei einzelne Querschnitte schrittweise frei geschaltet werden. Selbstverständlich ist auch eine stufenlose Flächenveränderung insbesondere über poröse Materialien, wie beispielsweise Sintermetalle, Keramiken oder Schäume, denkbar. Das Betätigen der Luftmengenbegrenzungseinrichtung erfolgt vorzugsweise nicht über separate elektrische oder elektromechanische Stelleinrichtungen, sondern über (unter-)druckabhängige (2. Alternative), insbesondere bei der ersten Alternative auch über dampfdruckabhängige Stellorgane, die den zugehörigen Dampfdruck als Regelgröße direkt in der Dampfzuführleitung abnehmen. Herrscht somit beispielsweise in der Dampfzuführleitung ein vergleichsweise hoher und oberhalb des Nenndrucks liegender Dampfdruck, so wird die Luftmengenbegrenzungseinrichtung derart betätigt, dass sie, sofern sie als flächenveränderbare Blende ausgebildet ist, die Blende zumindest leicht öffnet. Selbstverständlich ist auch das Anordnen von mehreren Blenden entweder in paralleler oder serieller Anordnung vorstellbar, wobei die jeweils durchströmbare Querschnittsfläche schrittweise oder analog verändert wird oder aber mehrere Querschnitt schrittweise einzeln oder kombiniert freigegeben werden, wodurch eine stets optimal Luftzuführrate und damit ein optimale Milchschaumergebnis und insbesondere ein gleichbleibendes und qualitativ hochwertiges Milchschaumergebnis erzielt werden kann. Mit der erfindungsgemäßen Luftmengenbegrenzungseinrichtung ist somit ein kostengünstiges und zugleich höchst effektives Regeln der dem Mischbereich zuzuführenden Luftmenge möglich.

Bei einer vorteilhaften Weiterbildung einer nicht erfindungsgemäßen Lösung, weist die zumindest eine Luftmengenbegrenzungseinrichtung ein federbelastetes Kegelventil auf, das ebenfalls in Abhängigkeit des Dampfdrucks zumindest teilweise öffnet oder schließt. Das federbelastete Kegelventil ersetzt somit die im vorigen Absatz beschriebene Blende und macht sich die Gegebenheit zu nutze, dass sich zwischen der Druckluftquelle (Luftpumpe) und einer üblicherweise stromauf dazu angeordneten festen Luftblende in Abhängigkeit des in der Dampfzuführleitung herrschenden Dampfdrucks ein unterschiedlicher Unterdruck ausbildet. Das Kegelventil ist dabei derart ausgeführt, dass es je nach anliegendem Unterdruck mehr oder weniger Strömungsquerschnitt freigibt und dadurch ähnlich einer Blende den Luftmengenfluss regelt. Da das federbelastete Kegelventil generell ausschließlich in Abhängigkeit des in der Dampfzuführleitung herrschenden Dampfdrucks und des daraus resultierenden Unterdrucks in der Luftzuführleitung betätigt wird, kann eine separate und aufwändige und teure Regelungseinrichtung entfallen. Sowohl die Ausgestaltung des Kegelventils als auch der einzelnen Federn im Kegelventil sind individuell frei wählbar, wodurch sich insbesondere der Öffnungsdruck, der Schließdruck sowie weitere Systemgrößen auf einfachste Weise einstellen lassen. Generell kann selbstverständlich eine derartige Luftmengenbegrenzungseinrichtung in umgekehrter Wirkweise auch das Zuführen der zur Herstellung des Milchschaums erforderlichen Milch regeln.

Erfindungsgemäß weist die Luftmengenbegrenzungseinrichtung ein Stellorgan in der Dampfzuführleitung und ein mit diesem gekoppeltes Begrenzungsorgan in der Luftzuführleitung auf. Das Stellorgan in der Dampfzuführleitung kann beispielsweise als Kolben oder als Membran ausgebildet sein, wogegen das Begrenzungsorgan in der Luftzuführleitung als verstellbarer Schieber ausgebildet sein kann. Durch eine direkte mechanische Kopplung des Begrenzungsorgans mit dem Stellorgan wirkt sich eine Dampfdruckänderung in der Dampfzuführleitung sofort und direkt auf das Stellorgan und damit auf das Begrenzungsorgan in der Luftzuführleitung aus, woraufhin eine Dampfdruckänderung in der Dampfzuführleitung unmittelbar eine Änderung des Strömungsquerschnitts in der Luftzuführleitung zur Folge hat. Alternativ hierzu, jedoch nicht Teil der Erfindung, können ein Stellorgan zwischen der Luftmengenbegrenzungseinrichtung und der Druckluftquelle und ein mit diesem gekoppeltes Begrenzungsorgan in der Luftzuführleitung angeordnet sein. Durch beide Alternativen können insbesondere bisher auftretende Hystereseerscheinungen, die das Milchschaumergebnis negativ beeinflussen, vermieden, oder zumindest reduziert werden.

Zweckmäßig ist zwischen dem Stellorgan und dem Begrenzungsorgan ein Feder-/Dämpferelement angeordnet. Durch das erfindungsgemäß angeordnete Feder-/Dämpferelement kann eine Dämpfung des gesamten Systems erreicht werden, wodurch insbesondere eine Anpassung auf unterschiedlichste Arbeitspunkte möglich ist. Durch die darüber hinaus frei wählbare Größe des Stellorgans bzw. des Kolbens bzw. der Membran des Stellorgans könne darüber hinaus Druckverhältnisse ausgeglichen werden. Das Begrenzungsorgan in der Luftzuführleitung kann dabei alternativ vor oder nach der Luftpumpe, das heißt saug- oder druckseitig der Druckluftquelle angeordnet werden. Mit der erfindungsgemäßen Luftmengenbegrenzungseinrichtung mit ihrem Stellorgan und dem damit gekoppelten Begrenzungsorgan ist insbesondere ein Ausgleich von systembedingten Störgrößen, wie beispielsweise Hystereseerscheinungen, ohne aufwändige und kostenintensive elektronische Regelung möglich.

Generell kann die als flächenveränderbare Blende ausgebildete Luftmengenbegrenzungseinrichtung auch unabhängig von dem in der Dampfzuführleitung herrschenden Dampfdruck betätigt werden, wobei einzelne Querschnitte schrittweise frei geschaltet werden können. Das Betätigen der Luftmengenbegrenzungseinrichtung erfolgt in diesem speziellen Fall über separate elektrische oder elektromechanische Stelleinrichtungen. Wird mehr Luft benötigt, was über entsprechende Sensoren ermittelt werden kann, wird die Blende zumindest mehr geöffnet. Selbstverständlich ist auch das Anordnen von mehreren Blenden entweder in paralleler oder serieller Anordnung vorstellbar, wobei die jeweils durchströmbare Querschnittsfläche schrittweise oder analog verändert wird oder aber mehrere Querschnitt schrittweise einzeln oder kombiniert freigegeben werden, wodurch eine stets optimal Luftzuführrate und damit ein optimale Milchschaumergebnis und insbesondere ein gleichbleibendes und qualitativ hochwertiges Milchschaumergebnis erzielt werden kann.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung wie in den Ansprüchen definiert zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch,
- Fig. 1: eine erfindungsgemäße Aufschäumvorrichtung gemäß einer ersten alternativen Ausführungsform,
- Fig. 2: eine Detaildarstellung einer nicht erfindungsgemäßer Luftmengenbegrenzungseinrichtung mit einem federbelasteten Kegelventil,
- Fig. 3: eine weitere mögliche Ausführungsform der erfindungsgemäßen Aufschäumvorrichtung,
- Fig. 4: eine Detaildarstellung der gemäß der in Fig. 3 dargestellten Luftmengenbegrenzungseinrichtung.

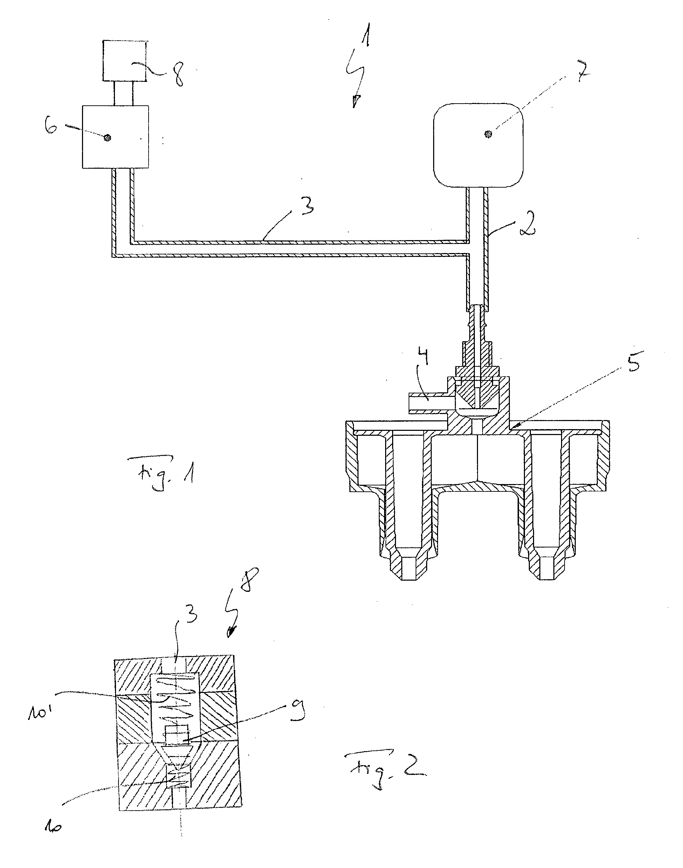

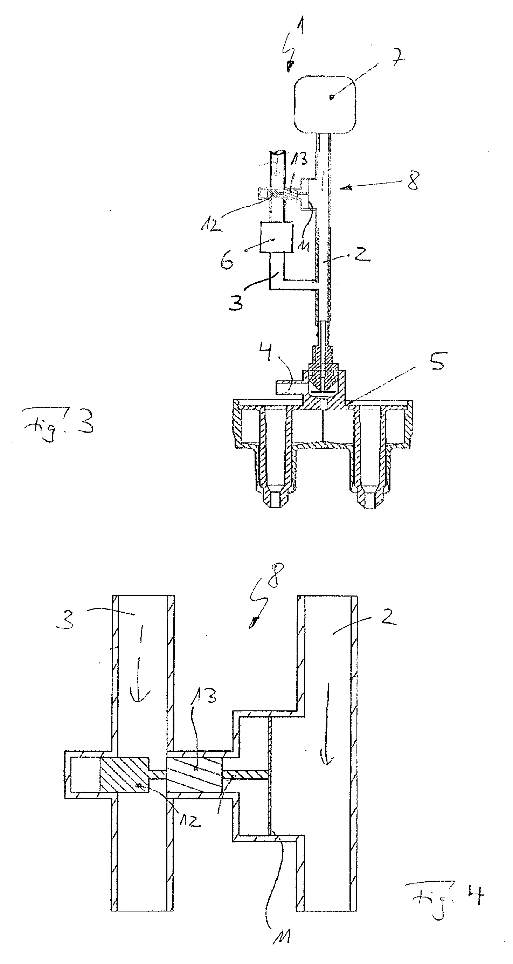

Entsprechend den Fig. 1 und 3, weist eine erfindungsgemäße Aufschäumvorrichtung 1 zum Aufschäumen von Milch, eine Dampfzuführleitung 2, eine Luftzuführleitung 3 sowie eine Milchzuführleitung 4 und einen Mischbereich 5 auf, in dem die Zuleitungen 2, 3 und 4 zusammengeführt werden. Im Bereich der Luftzuführleitung 3 ist dabei eine Druckluftquelle 6 zum Einblasen von Luft vorgesehen, wogegen im Bereich der Dampfzuführleitung 2 eine Dampfdruckquelle 7 angeordnet ist. Nachteilig bei bisherigen Ausführungsformen war, dass zur Dampferzeugung in der Dampfdruckquelle 7 eine elektrische Heizung benutzt wurde, welche eine Heizungshysterese aufwies, wodurch der in der Dampfdruckquelle 7 vorherrschende tatsächliche Dampfdruck von einem Nenndruck abwich. Die Druckluftquelle 6 hingegen war auf einen definierten Gegendruck abgestimmt, so dass diese bei in der Dampfzuführleitung 2 unterhalb des Nenndrucks liegendem Dampfdruck zu viel Luft und im umgekehrte Fall zu wenig Luft förderte, wodurch unterschiedliche und insbesondere auch nicht reproduzierbare Milchschaumergebnisse die Folge waren. Bei hochwertigen Kaffeeautomaten in der Gastronomie sind derartige Abweichungen bzw. Schwankungen jedoch nicht hinnehmbar. Die erfindungsgemäße Aufschäumvorrichtung 1 weist deshalb erfindungsgemäß zumindest eine Luftmengenbegrenzungseinrichtung 8 auf, die ein Einblasen der Luft in die Luftzuführleitung 3 in Abhängigkeit des Dampfdrucks/Drucks in der Dampfzuführleitung 2 bewirkt bzw. regelt, oder die gemäß einer nicht dargestellten Ausführungsform stromauf der Druckluftquelle 6 angeordnet und derart ausgebildet ist, dass sie ein Einblasen der Luft in die Luftzuführleitung 3 in Abhängigkeit eines zwischen der Luftmengenbegrenzungseinrichtung 8 und der Druckluftquelle 6 herrschenden Unterdrucks bewirkt bzw. regelt. Dabei ist selbstverständlich klar, dass sich die Luftzuführleitung 3 nicht nur bis zur Druckluftquelle 6 erstreckt, sondern von dieser auch noch zumindest bis zur Luftmengenbegrenzungseinrichtung 8. Die Luftzuführleitung 3 umfasst also insbesondere auch den Bereich zwischen der Druckluftquelle 6 und der Luftmengenbegrenzungseinrichtung 8.

Die zumindest eine Luftmengenbegrenzungseinrichtung 1 kann beispielsweise eine flächenveränderbare Blende aufweisen, die insbesondere ein von Luft durchströmbares, poröses Material, wie beispielsweise ein Sintermetall, einen Schaum oder eine Keramik besitzt. Dies ist jedoch nicht Teil der vorliegenden Erfindung. Je nach gewünschter Luftmenge wird dabei die Blende mehr oder weniger geöffnet und dadurch der durch das poröse Material führende Querschnitt mehr oder weniger freigegeben. Die durchströmbare Fläche kann dabei entweder schrittweise, das heißt in Stufen oder aber auch stufenlos freigegeben werden. Denkbar ist dabei eine Flächenveränderung auch über mehrere definierte Blenden, wobei hier ein schrittweises Umschalten erfolgt. Das Freigeben unterschiedlicher Strömungsquerschnitte der Blende kann dabei entweder über eine elektromechanische Verstellung erfolgen oder vorzugsweise über eine mechanische Verstellung, beispielsweise analog der gemäß der Fig. 4 dargestellten Luftmengenbegrenzungseinrichtung 8. Selbstverständlich ist auch das parallele oder serielle Anordnen mehrerer Blenden denkbar. Die Luftmengenbegrenzungseinrichtung 8 ist dabei stromauf der Druckluftquelle 6, das heißt saugseitig derselben angeordnet.

Generell kann die als flächenveränderbare Blende ausgebildete Luftmengenbegrenzungseinrichtung 8 gemäß der Fig. 1 auch unabhängig von dem in der Dampfzuführleitung 2 herrschenden Dampfdruck betätigt werden, wobei einzelne Querschnitte schrittweise frei geschaltet werden können. Das Betätigen der Luftmengenbegrenzungseinrichtung 8 erfolgt in diesem Fall über separate elektrische, pneumatische oder elektromechanische, nicht gezeigte Stelleinrichtungen. Wird mehr Luft benötigt, was über entsprechende Sensoren ermittelt werden kann, wird die Blende zumindest mehr geöffnet. Die in der Fig. 1 dargestellte Aufschäumvorrichtung 1 besitzt somit ebenfalls eine Dampfzuführleitung 2, eine Luftzuführleitung 3 und eine Milchzuführleitung 4 und einen Mischbereich 5, wobei die Luftzuführleitung 3 in die Dampfzuführleitung 2 mündet und wobei die Luftzuführleitung 3 mit einer Druckluftquelle 6 zum Einblasen der Luft verbunden ist. Nur wird bei dieser Ausführungsform die Luftmengenbegrenzungseinrichtung nicht vom in der Dampfzuführleitung 2 herrschenden Dampfdruck oder druck gesteuert/geregelt.

Gemäß der Fig. 2 ist eine Luftmengenbegrenzungseinrichtung 8 gezeigt, welche in diesem Fall ein federbelastetes Kegelventil 9 besitzt, das in Abhängigkeit des Dampfdrucks in der Zuführleitung 2 zumindest teilweise öffnet oder schließt. Die Luftmengenbegrenzungseinrichtung 8 macht sich dabei die Gegebenheit zu nutze, dass sich zwischen der Druckluftquelle 6 und der Luftmengenbegrenzungseinrichtung 8 in Abhängigkeit des Dampfdrucks in der Dampfzuführleitung 2 ein unterschiedlicher Unterdruck ausbildet. Die gemäß der Fig. 2 dargestellte Luftmengenbegrenzungseinrichtung 8 ist demzufolge derart ausgeführt, dass sich je nach anliegendem Unterdruck eine Feder 10 mehr oder weniger vorspannt, was zu einer Querschnittsveränderung und damit einen unterschiedlich Luftdurchfluss führt. Generell ist dabei das gezeigte federbelastete Kegelventil 9 im Ruhestand über zwei Federn 10 und 10' in einem teilweise geöffneten Zustand gehalten, wobei sich die beiden Federn 10 und 10' entgegenwirken. Mit der gemäß der Fig. 2 dargestellten erfindungsgemäßen Luftmengenbegrenzungseinrichtung 8 ist ein Ausgleich von systembedingten Störgrößen ohne aufwändige und kostenintensive elektronische Regelung möglich und damit ein konstantes Milchschaumergebnis erzielbar. Im Gegensatz zu dem auf dem Markt vorhandenen System des Schnabelventils, welches sich ähnlich verhält, können hier die Nachteile des Schnabelventils (wie z.B. Wiederholgenauigkeit, Teiletoleranzen und Verstellbarkeit auf verschiedene Arbeitspunkte) deutlich verbessert werden.

Mit der erfindungsgemäßen Luftmengenbegrenzungseinrichtung 8 kann somit eine druckgesteuerte Luftvolumenstromregelung erreicht werden, die mit einfachsten mechanischen Bauteilen funktioniert und dadurch eine aufwändige, insbesondere elektronische, Regelungseinrichtung erübrigt. Die gemäß der Fig. 2 dargestellte Luftmengenbegrenzungseinrichtung 8 ist dabei durch Einsetzen unterschiedlicher Federn 10, 10' mit unterschiedlicher Vorspannungen individuell einstellbar, wobei die Luftmengenbegrenzungseinrichtung 8 mit unveränderter Wirkweise beispielsweise auch auf die Milchzuführung wirken kann. Durch die geeignete Wahl entsprechender Federkräfte wird die durchströmbare Fläche so verändert, dass mit zunehmendem Unterdruck die Fläche kleiner und somit weniger Luft durchströmen kann.

Betrachtet man die erfindungsgemäße Luftmengenbegrenzungseinrichtung 8 gemäß den Fig. 3 und 4, so kann man insbesondere aus der Fig. 4 erkennen, dass die Luftmengenbegrenzungseinrichtung 8 ein Stellorgan 11 in der Dampfzuführleitung 2 und ein mit diesem gekoppeltes Begrenzungsorgan 12 in der Luftzuführleitung 3 aufweist. Das Stellorgan 11 in der Dampfzuführleitung 2 kann beispielsweise als Kolben oder als Membran ausgebildet sein, wogegen das Begrenzungsorgan 12 in die Luftzuführleitung 3 einschiebbarer Schieber ausgebildet sein kann. Zwischen dem Stellorgan 11 und dem Begrenzungsorgan 12 kann darüber hinaus ein Feder-/Dämpferelement 13 angeordnet sein. Generell kann dabei die Federungs-/Dämpfungsfunktion selbstverständlich auch von dem Stellorgan 11 übernommen werden, sofern dieses insbesondere als Membran ausgebildet ist. Die gemäß der Fig. 4 dargestellte Luftmengenbegrenzungseinrichtung 8 regelt somit ebenfalls selbsttätig und in Abhängigkeit des in der Dampfzuführleitung 2 herrschenden Dampfdrucks die in der Luftzuführleitung 3 strömende und dem Mischbereich 5 zuzuführende Luftmenge. Da die dargestellte Luftmengenbegrenzungseinrichtung 8 ebenfalls ohne aufwändige Regelungseinrichtung und ohne separate elektrische Stelleinrichtung auskommt, kann diese kostengünstig gestellt werden.

Nicht im Rahmen diese Erfindung ist auch eine Anordnung denkbar, bei der die Luftmengenbegrenzungseinrichtung 8 ein Stellorgan 11 zwischen dieser und der Druckluftquelle 6 und ein mit diesem gekoppeltes Begrenzungsorgan 12 in der Luftzuführleitung 3 aufweist.

Generell sind die erfindungsgemäßen Luftmengenbegrenzungseinrichtungen 8 in Aufschäumvorrichtungen 1 von Kaffeeautomaten einsetzbar, wodurch insbesondere Störgrößen, wie beispielsweise Hystereseerscheinungen bei Heizeinrichtungen ausgeglichen und dadurch ein konstantes und qualitativ hochwertiges Milchschaumergebnis erzielt werden kann.

## Patentansprüche

1. Aufschäumvorrichtung (1) zum Aufschäumen von Milch, mit einer Dampfzuführleitung (2), einer Luftzuführleitung (3) und einer Milchzuführleitung (4) und mit einem Mischbereich (5), wobei die Luftzuführleitung (3) in die Dampfzuführleitung (2) mündet oder mit dieser in dem Mischbereich (5) zusammengeführt ist, wobei im Bereich der Luftzuführleitung (3) eine Druckluftquelle (6) zum Einblasen der Luft vorgesehen ist, wobei zumindest eine Luftmengenbegrenzungseinrichtung (8) vorgesehen ist, die ein Einblasen der Luft in die Luftzuführleitung (3) in Abhängigkeit des in der Dampfzuführleitung (2) herrschenden Dampfdrucks/Drucks bewirkt bzw. regelt, oder wobei zumindest eine Luftmengenbegrenzungseinrichtung (8) stromauf der Druckluftquelle (6) angeordnet und derart ausgebildet ist, dass sie ein Einblasen der Luft in die Luftzuführleitung (3) in Abhängigkeit eines zwischen der Luftmengenbegrenzungseinrichtung (8) und der Druckluftquelle (6) herrschenden Unterdrucks bewirkt bzw. regelt,
**dadurch gekennzeichnet, dass**
- die Luftmengenbegrenzungseinrichtung (8) ein Stellorgan (11) in der Dampfzuführleitung (2) und ein mit diesem gekoppeltes Begrenzungsorgan (12) in der Luftzuführleitung (3) aufweist,
- das Stellorgan (11) als Kolben oder als Membran ausgebildet ist, und/oder
- das Begrenzungsorgan (12) als in die Luftzuführleitung (3) einschiebbarer Schieber ausgebildet ist.

2. Aufschäumvorrichtung nach Anspruch 1,
**dadurch gekennzeichnet, dass**
das zwischen dem Stellorgan (11) und dem Begrenzungsorgan (12) ein Feder-/Dämpferelement (13) angeordnet ist.

3. Kaffeeautomat mit einer Aufschäumvorrichtung (1) nach einem der vorhergehenden Ansprüche.

## Claims

1. A frothing device (1) for frothing milk, comprising a steam supply line (2), an air supply line (3) and a milk supply line (4) and a mixing area (5), wherein the air supply line (3) leads into the steam supply line (2) or is joined thereto in the mixing area (5), wherein provision is made in the area of the air supply line (3) for a compressed air source (6) for blowing in the air, wherein provision is made for at least one air quantity limiting device (8), which effects or regulates, respectively, a blowing of the air into the air supply line (3) as a function of the steam pressure/pressure prevailing in the steam supply line (2), or wherein at least one air quantity limiting device (8) is arranged upstream of the compressed air source (6) and is embodied such that it effects or regulates, respectively, a blowing of the air into the air supply line (3) as a function of a low pressure prevailing between the air quantity limiting device (8) and the compressed air source (6),
**characterized in that**
- the air quantity limiting device (8) encompasses an actuator (11) in the steam supply line (2) and a limiting member (12), which is coupled to said actuator (11), in the air supply line (3),
- the actuator (11) is embodied as piston or as membrane, and/or
- the limiting member (12) is embodied as a feeder, which can be inserted into the air supply line (3).

2. The frothing device according to claim 1,
**characterized in that**
a spring/damping element (13) is arranged between the actuator (11) and the limiting member (12).

3. A coffee machine comprising a frothing device (1) according to one of the preceding claims.

## Revendications

1. Dispositif émulsionneur (1) pour émulsionner du lait, avec un conduit (2) d'alimentation de vapeur, un conduit (3) d'alimentation d'air et un conduit (4) d'alimentation de lait et avec une zone de mélange (5), le conduit (3) d'alimentation d'air débouchant dans un conduit (2) d'alimentation de vapeur ou rejoignant ce dernier dans la zone de mélange (5), dans la région du conduit (3) d'alimentation d'air étant prévue une source (6) d'air comprimé pour insuffler l'air, alors qu'il est prévu au moins un système (8) limiteur de la quantité d'air qui provoque ou régule une insufflation de l'air dans le conduit (3) d'alimentation d'air en fonction de la pression de vapeur/de la pression régnant dans le conduit (2) d'alimentation de vapeur ou alors qu'il est placé au moins un système (8) limiteur de la quantité d'air en amont de la source (6) d'air comprimé et qu'il est conçu de telle sorte qu'il provoque ou qu'il régule une insufflation de l'air dans le conduit (3) d'alimentation d'air en fonction d'une dépression régnant entre le système (8) limiteur de la quantité d'air et la source (6) d'air comprimé,
**caractérisé en ce que**
- le système (8) limiteur de la quantité d'air comporte un organe de réglage (11) dans le conduit (2) d'alimentation de vapeur et un organe limiteur (12) couplé à celui-ci dans le conduit (3) d'alimentation d'air,
- l'organe de réglage (11) est conçu en tant que piston ou en tant que membrane et/ou
- l'organe limiteur (12) est conçu en tant que curseur pouvant être inséré dans le conduit (3) d'alimentation d'air.

2. Dispositif émulsionneur selon la revendication 1,
**caractérisé en ce**
**qu'**un élément (13) à ressort/ou amortisseur est placé entre l'organe de réglage (11) et l'organe limiteur (12).

3. Distributeur de café avec un dispositif émulsionneur (1) selon l'une quelconque des revendications précédentes.
